# EUROPÄISCHE PATENTSCHRIFT

(11) **EP 4 010 142 B1**
(45) Veröffentlichungstag und Bekanntmachung des Hinweises auf die Patenterteilung: **04.10.2023**
(21) Anmeldenummer: 20750678.3
(22) Anmeldetag: 06.08.2020
(51) Int. Cl.: B23K 9/073, B23K 9/09, B23K 9/173

(54) **VERFAHREN UND VORRICHTUNG ZUR STABILISIERUNG EINES ÜBERGANGES ZWISCHEN VERSCHIEDENARTIGEN SCHWEISSPROZESSPHASEN EINES SCHWEISSPROZESSES**
METHOD AND DEVICE FOR STABILIZING A TRANSITION BETWEEN DIFFERENT WELDING PROCESS PHASES OF A WELDING PROCESS
PROCÉDÉ ET DISPOSITIF DE STABILISATION D'UNE TRANSITION ENTRE DIFFÉRENTES PHASES D'UN PROCEDÉ DE SOUDAGE

(30) Priorität: 06.08.2019 EP 19190384
(43) Veröffentlichungstag der Anmeldung: 15.06.2022
(73) Patentinhaber: Fronius International GmbH, 4643 Pettenbach (AT)
(72) Erfinder: SÖLLINGER, Dominik, 4643 Pettenbach (AT); WALDHÖR, Andreas, 4643 Pettenbach (AT); MAYER, Manuel, 4643 Pettenbach (AT)
(74) Vertreter: Isarpatent
(86) Internationale Anmeldenummer: PCT/EP2020/072207
(87) Internationale Veröffentlichungsnummer: WO 2021/023845

(56) Entgegenhaltungen:
- EP-A2- 2 359 974
- US-A1- 2014 021 182
- US-A1- 2015 114 940

## Beschreibung

Die Erfindung betrifft ein Verfahren und eine Vorrichtung zur Stabilisierung eines Überganges zwischen verschiedenartigen Schweißprozessphasen eines Schweißprozesses, insbesondere bei Lichtbogenschweißverfahren, gemäß dem Oberbegriff des Anspruchs 1, bzw. des Anspruchs 11. Die Gattung wird in US2014/021182 A1 gezeigt.

Beim Lichtbogenschweißen brennt ein Schweißlichtbogen zwischen einem Werkstück und einer Schweißdrahtelektrode. Die Schweißdrahtelektrode kann dabei abschmelzen und als Zusatzwerkstoff dienen. Beim Schutzgasschweißen wird der Lichtbogen durch ein Schutzgas, wie beispielsweise Kohlendioxid oder Argon, vor der Atmosphäre abgeschirmt. Die Schweißdrahtelektrode, die kontinuierlich abschmilzt, wird von einer Drahtspule laufend nachgezogen. Die Schweißdrahtelektrode verläuft hierbei in einem Schlauch, mit dem auch das Schutzgas zugeführt wird. Beim MIG-Schweißen, dem Metall-Inertgas-Schweißen, verwendet man inerte Schutzgase. Beim MAG-Schweißen, dem Metallaktivgas-Schweißen werden demgegenüber reaktionsfähige Gase wie Kohlenstoffdioxid als Schutzgas eingesetzt.

Verschiedene Schweißparameter, insbesondere die Lichtbogenlänge, beeinflussen das Ergebnis des Schweißprozesses. Kurzlichtbogenschweißen findet Anwendung bei dünnen Blechen oder schwierigen Schweißstellen. Es entsteht hierbei rissarmer und glatter Übergang der Werkstoffe. Demgegenüber findet Langlichtbogenschweißen vor allem Anwendung bei dickeren Blechen. Beim Metallschutzgasschweißen MSG, d.h. wahlweise das MIG oder MAG-Schweißen wird eine abschmelzbare Schweißdrahtelektrode verwendet, die von einem Elektromotor mit veränderbarer Drahtvorschubgeschwindigkeit nachgeführt werden kann. Die Schweißdrahtelektrode wird entsprechend den eingestellten Schweißparametern durch den Schweißlichtbogen in unterschiedlicher Weise abgeschmolzen.

Beim Schweißen mit Impulslichtbogen wird ein Grundstrom regelmäßig durch einen erhöhte Impulsstrom überlagert. Während der Grundstromphase brennt der Lichtbogen bzw. Schweißlichtbogen mit geringer Leistung, wobei der Zusatzwerkstoff angeschmolzen wird und das Schweißbad flüssig gehalten wird. Bei der Impulsphase bildet sich ein Tropfen, der durch die wachsende magnetische Einschnürung (Pinch-Effekt) abgelöst wird. Abhängig vom Drahtdurchmesser der Schweißdrahtelektrode und dem Material der Schweißdrahtelektrode können die Einstellwerte derart gewählt werden, dass bei jedem Stromimpuls ein Tropfen erzeugt und abgelöst wird. Je nach eingestellter Schweißspannung und eingestelltem Schweißstrom sowie eingestellter Lichtbogenlänge kann man zwischen verschiedenen Lichtbogenarten unterscheiden, wie allgemein aus dem Stand der Technik bekannt. Die verschiedenen Lichtbogenarten umfassen einen Kurzlichtbogen, einen Langlichtbogen und einen Impulslichtbogen und einen sogenannten Sprühlichtbogen sowie einen rotierenden Lichtbogen. Der Drahtvorschub kann dabei sowohl in Richtung Werkstück als auch in entgegengesetzter Richtung gefördert werden.

In vielen Anwendungsfällen ist es notwendig, zwischen verschiedenen Schweißprozessphasen zu wechseln. Die verschiedenen Schweißprozessphasen weisen unterschiedliche Schweißparameter und/oder Lichtbogenarten auf. Bei vielen Schweißprozessen findet ein zyklischer Wechsel zwischen verschiedenen Schweißprozessphasen statt. Allerdings besteht bei herkömmlichen Schweißprozessen die Schwierigkeit, einen Prozessübergang von einer Schweißprozessphase zur nachfolgenden Schweißprozessphase des Schweißprozesses zu stabilisieren. Derartige Instabilitäten beim Wechsel zwischen verschiedenen Schweißprozessphasen können negative Auswirkungen auf das Schweißergebnis haben, insbesondere hinsichtlich des Aussehens der gebildeten Schweißnaht oder auftretender Schweißspritzer.

Es ist daher eine Aufgabe der vorliegenden Erfindung, ein Verfahren und eine Vorrichtung zur Stabilisierung eines Überganges zwischen verschiedenartigen Schweißprozessphasen eines Schweißprozesses zu schaffen.

Diese Aufgabe wird erfindungsgemäß durch ein Verfahren mit den in Patentanspruch 1 angegebenen Merkmalen gelöst.

Die Erfindung schafft demnach ein Verfahren zum Stabilisieren eines Überganges zwischen verschiedenartigen Schweißprozessphasen eines Schweißprozesses,
wobei zumindest in den Schweißprozessphasen ein Werkstück jeweils mit einem Schweißlichtbogen geschweißt wird, der sich zwischen einer Schweißdrahtelektrode und dem Werkstück erstreckt, und einen für die mindestens eine Schweißprozessphase einstellbaren Lichtbogenlängenparameter aufweist, wobei für den Übergang zwischen aufeinanderfolgenden verschiedenartigen Schweißprozessphasen bei einer Änderung des eingestellten Lichtbogenlängenparameters des Schweißlichtbogens parallel dazu mindestens ein Übergangsschweißparameter in Abhängigkeit von der vorgenommenen Lichtbogenlängenparameteränderung zur Stabilisierung des Schweißprozessphasenüberganges automatisch angepasst wird.

Bei einer möglichen Ausführungsform des erfindungsgemäßen Verfahrens zur Stabilisierung eines Überganges zwischen verschiedenartigen Schweißprozessphasen eines Schweißprozesses umfassen die Übergangsschweißparameter eine Drahtvorschubgeschwindigkeit der abschmelzbaren Schweißdrahtelektrode.

Bei einer weiteren möglichen Ausführungsform des erfindungsgemäßen Verfahrens zur Stabilisierung eines Überganges zwischen verschiedenartigen Schweißprozessphasen eines Schweißprozesses umfassen die Übergangsschweißparameter eine Amplitude und/oder eine Polarität des durch die Schweißdrahtelektrode fließenden mittleren Schweißstromes.

Bei einer weiteren möglichen Ausführungsform des erfindungsgemäßen Verfahrens zur Stabilisierung eines Überganges zwischen verschiedenartigen Schweißprozessphasen eines Schweißprozesses umfassen die Übergangsschweißparameter eine Amplitude und/oder eine Polarität der zwischen der Schweißdrahtelektrode und dem Werkstück anliegenden Schweißspannung.

Bei einer weiteren möglichen Ausführungsform des erfindungsgemäßen Verfahrens zur Stabilisierung eines Überganges zwischen verschiedenartigen Schweißprozessphasen eines Schweißprozesses umfassen die Übergangsschweißparameter eine Anzahl und/oder eine Frequenz von Impulsen des durch die Schweißdrahtelektrode fließenden Schweißstromes.

Bei einer weiteren möglichen bevorzugten Ausführungsform des erfindungsgemäßen Verfahrens weist der Lichtbogenparameter eine Lichtbogenlänge des Schweißlichtbogens auf.

Bei einer möglichen Ausführungsform des erfindungsgemäßen Verfahrens zur Stabilisierung eines Überganges zwischen verschiedenartigen Schweißprozessphasen eines Schweißprozesses wird mit zunehmender bzw. abnehmender vorgenommener Lichtbogenlängenänderung die Drahtvorschubgeschwindigkeit und/oder die Beschleunigung der abschmelzbaren Schweißdrahtelektrode als Übergangsschweißparameter zur Stabilisierung des Schweißprozessphasenüberganges automatisch erhöht bzw. reduziert.

Bei einer weiteren möglichen Ausführungsform des erfindungsgemäßen Verfahrens zur Stabilisierung eines Überganges zwischen verschiedenartigen Schweißprozessphasen eines Schweißprozesses wird mit zunehmender bzw. abnehmender vorgenommener Lichtbogenlängenänderung die Amplitude und/oder Zeitdauer des Schweißstromes und/oder die Amplitude und/oder Zeitdauer der Schweißspannung automatisch erhöht bzw. reduziert.

Bei einer weiteren möglichen Ausführungsform des erfindungsgemäßen Verfahrens zur Stabilisierung eines Überganges zwischen verschiedenartigen Schweißprozessphasen eines Schweißprozesses wird mit zunehmender bzw. abnehmender vorgenommener Lichtbogenlängenänderung die Anzahl und/oder die Frequenz von Impulsen des Schweißstromes automatisch reduziert bzw. erhöht.

Bei einer weiteren möglichen Ausführungsform des erfindungsgemäßen Verfahrens zur Stabilisierung eines Überganges zwischen verschiedenartigen Schweißprozessphasen eines Schweißprozesses werden für verschiedene Kombinationen von Paaren aufeinanderfolgender verschiedenartiger Schweißprozessphasen des Schweißprozesses jeweils für verschiedene vornehmbare Lichtbogenparameteränderungen zugehörige konfigurierbare Schweißparametersätze von Übergangsschweißparametern in einem Parameterdatenspeicher tabellarisch gespeichert.

Bei einer weiteren möglichen Ausführungsform des erfindungsgemäßen Verfahrens zur Stabilisierung eines Überganges zwischen verschiedenartigen Schweißprozessphasen eines Schweißprozesses werden in Abhängigkeit von der vorgenommenen Lichtbogenparameteränderung und der Kombination der beiden aufeinanderfolgenden verschiedenartigen Schweißprozessphasen der zugehörige Schweißparametersatz aus dem Parameterdatenspeicher ausgelesen und die entsprechenden Übergangsschweißparameter zur Stabilisierung des Schweißprozessphasenüberganges zwischen den beiden Schweißprozessphasen angepasst.

Bei einer weiteren möglichen Ausführungsform des erfindungsgemäßen Verfahrens zur Stabilisierung eines Überganges zwischen verschiedenartigen Schweißprozessphasen eines Schweißprozesses werden für verschiedene Kombinationen von Paaren aufeinanderfolgender verschiedenartiger Schweißprozessphasen des Schweißprozesses Übergangsfunktionskennlinien für verschiedene Übergangsschweißparameter vorgesehen.

Bei einer weiteren möglichen Ausführungsform des erfindungsgemäßen Verfahrens zur Stabilisierung eines Überganges zwischen verschiedenartigen Schweißprozessphasen eines Schweißprozesses werden in Abhängigkeit von der vorgenommenen Lichtbogenparameteränderung und der zugehörigen gespeicherten Übergangsfunktionskennlinien Parameterwerte für die verschiedenen Übergangsschweißparameter während des Schweißprozessphasenüberganges berechnet und die Übergangsschweißparameter zur Stabilisierung des Schweißprozessphasenüberganges entsprechend den berechneten Parameterwerten automatisch angepasst.

Bei einer weiteren möglichen Ausführungsform des erfindungsgemäßen Verfahrens weisen die unterschiedlichen Schweißprozessphasen des Schweißprozesses auf:
eine Kurzlichtbogenschweißphase,
eine Langlichtbogenschweißphase,
eine Impulslichtbogenschweißphase,
eine Kurzlichtbogenschweißphase mit Vor- oder Rückbewegung,
eine Sprühlichtbogenschweißphase und/oder
eine Schweißphase mit rotierendem Lichtbogen, und/oder eine Übergangslichtbogenphase.

Die Erfindung schafft gemäß einem weiteren Aspekt ein Schweißgerät mit den in Patentanspruch 11 angegebenen Merkmalen.

Die Erfindung schafft demnach ein Schweißgerät zum Schweißen eines Werkstückes in einem Schweißprozess, der verschiedenartige Schweißprozessphasen umfasst, in denen das Werkstück jeweils mit einem Schweißlichtbogen geschweißt wird, der sich zwischen einer Schweißdrahtelektrode des Schweißgerätes und dem Werkstück erstreckt, wobei für die Schweißprozessphasen ein Lichtbogenparameter des Schweißlichtbogens, insbesondere dessen Lichtbogenlänge, einstellbar ist, wobei das Schweißgerät eine Steuerung aufweist, die während eines Überganges zwischen verschiedenartigen Schweißprozessphasen des Schweißprozesses eine Änderung des Lichtbogenparameters des Schweißlichtbogens entsprechend der für die Schweißprozessphasen eingestellten Lichtbogenparameter vornimmt und gleichzeitig mindestens einen Übergangsschweißparameter einer Schweißstromquelle des Schweißgerätes in Abhängigkeit der vorgenommenen Lichtbogenparameteränderung zur Stabilisierung des Schweißprozessphasenüberganges innerhalb des Schweißprozesses automatisch anpasst.

Bei einer möglichen Ausführungsform des erfindungsgemäßen Schweißgerätes sind für verschiedene Schweißprozessphasen des Schweißprozesses jeweils zugehörige Lichtbogenparameter-Sollwerte für den zu verwendenden Lichtbogenparameter voreingestellt, welche durch einen Nutzer mittels eines Einstellelementes innerhalb vorgegebener Grenzen jeweils manuell justierbar bzw. nachjustierbar sind.

Die Lichtbogenparameter-Sollwerte, insbesondere für die Lichtbogenlänge, können auch über ein Interface von einer externen, übergeordneten Steuerung oder einer Robotersteuerung vorgegeben werden.

Bei einer weiteren möglichen Ausführungsform des erfindungsgemäßen Schweißgerätes sind für verschiedene Kombinationen von Paaren aufeinanderfolgender verschiedenartiger Schweißprozessphasen des Schweißprozesses jeweils für verschiedene vornehmbare Lichtbogenparameteränderungen zugehörige konfigurierbare Schweißparametersätze von Übergangsschweißparametern in einem Parameterdatenspeicher des Schweißgerätes tabellarisch gespeichert.

Bei einer weiteren möglichen Ausführungsform des erfindungsgemäßen Schweißgerätes werden in Abhängigkeit von der vorgenommenen Lichtbogenparameteränderung und der Kombination der beiden aufeinanderfolgenden verschiedenartigen Schweißprozessphasen der zugehörige Schweißparametersatz aus dem Parameterdatenspeicher des Schweißgerätes ausgelesen und die entsprechenden Übergangsschweißparameter durch die Steuerung des Schweißgerätes zur Stabilisierung des Schweißprozessphasenüberganges zwischen den beiden Schweißprozessphasen automatisch angepasst.

Bei einer weiteren möglichen Ausführungsform des erfindungsgemäßen Schweißgerätes sind für die verschiedenen Kombinationen von Paaren aufeinanderfolgender verschiedenartiger Schweißprozessphasen des Schweißprozesses Übergangsfunktionskennlinien für verschiedene Übergangsschweißparameter vorgesehen.

Bei einer möglichen Ausführungsform des erfindungsgemäßen Schweißgerätes werden in Abhängigkeit von der vorgenommenen Lichtbogenparameteränderung und den zugehörigen gespeicherten Übergangsfunktionskennlinien Parameterwerte für die verschiedenen Übergangsschweißparameter während des Schweißprozessphasenüberganges durch eine Berechnungseinheit der Steuerung des Schweißgerätes berechnet und die Übergangsschweißparameter zur Stabilisierung des Schweißprozessphasenüberganges durch die Steuerung des Schweißgerätes automatisch angepasst.

Bei einer weiteren möglichen Ausführungsform des erfindungsgemäßen Schweißgerätes weist das Schweißgerät eine Schnittstelle zum Laden von Schweißparametersätzen der Übergangsschweißparameter und/oder zum Laden von Übergangsfunktionskennlinien aus einer Datenbank auf.

Im Weiteren werden mögliche Ausführungsformen des erfindungsgemäßen Verfahrens und der erfindungsgemäßen Vorrichtung zur Stabilisierung eines Überganges zwischen verschiedenartigen Schweißprozessphasen eines Schweißprozesses unter Bezugnahme auf die beigefügten Figuren näher erläutert.
- Fig. 1: zeigt ein schematisches Blockschaltbild zur Erläuterung der Funktionsweise eines erfindungsgemäßen Schweißgerätes;
- Fig. 2: zeigt eine Skizze zur Erläuterung der Funktionsweise des erfindungsgemäßen Verfahrens und der erfindungsgemäßen Vorrichtung zur Stabilisierung eines Überganges zwischen verschiedenartigen Schweißprozessphasen eines Schweißprozesses;
- Fig. 3A, 3B, 3C: zeigen beispielhaft Schweißprozesse mit zyklisch abwechselnden Schweißprozessphasen zur Erläuterung der Funktionsweise des erfindungsgemäßen Verfahrens und der erfindungsgemäßen Vorrichtung zur Stabilisierung eines Überganges zwischen verschiedenartigen Schweißprozessphasen eines Schweißprozesses;

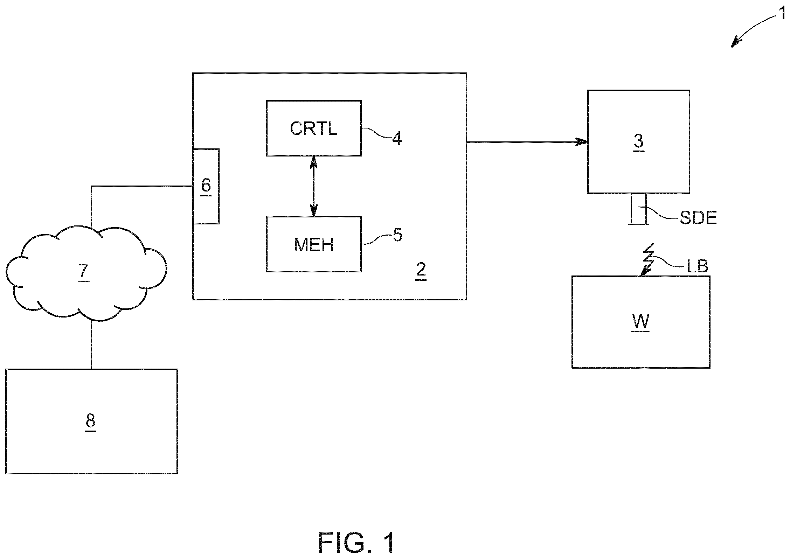

Wie man aus Fig. 1 erkennen kann, weist ein Schweißgerät 1 gemäß einem Aspekt der Erfindung eine Schweißstromquelle 2 auf, die einen Schweißstrom und eine Schweißspannung an einen Schweißbrenner 3 des Schweißgerätes 1 liefert. Der Schweißbrenner 3 kann über eine Schutzgasdüse verfügen. Aus einem Kontaktrohr des Schweißbrenners 3 kann eine Schweißdrahtelektrode SDE herausgeführt werden, um ein Werkstück W zu schweißen. Zwischen der Schweißdrahtelektrode SDE und dem Werkstück W entsteht ein Schweißlichtbogen LB, wie in Fig. 1 dargestellt. Das Schweißgerät 1 dient zum Schweißen des Werkstückes W in einem Schweißprozess SP, der verschiedenartige Schweißprozessphasen SPP umfassen kann, in denen das Werkstück W jeweils mit dem Schweißlichtbogen LB geschweißt wird. Für die verschiedenen Schweißprozessphasen SPP können Lichtbogenparameter LBP des Schweißlichtbogens LB, insbesondere dessen Lichtbogenlänge LBL, eingestellt werden. Das Schweißgerät 1 weist eine Steuerung 4 auf, die bei einem Übergang zwischen verschiedenartigen Schweißprozessphasen SPP des Schweißprozesses SP eine Änderung eines Lichtbogenlängenparameters LBLP des Schweißlichtbogens SLB entsprechend der für die Schweißprozessphasen SPP eingestellten Lichtbogenparameter LBP vornimmt. Dabei passt die Steuerung 4 gleichzeitig mindestens einen Übergangsschweißparameter ÜSP der Schweißstromquelle 2 des Schweißgerätes 1 in Abhängigkeit von der vorgenommenen Lichtbogenlängenparameteränderung ΔLBLP zur Stabilisierung des Schweißprozessüberganges SPÜ innerhalb des Schweißprozesses SP automatisch an. Die Schweißstromquelle 4 kann über eine Schnittstelle 6 verfügen. Über die Schnittstelle 6 und ein Netzwerk 7 kann die lokale Steuerung 4 der Schweißstromquelle 2 Steuerbefehle und/oder Soll-Parametereinstellungen von einer externen, übergeordneten Steuerung 8, beispielsweise einer Automatisierungsanlage erhalten.

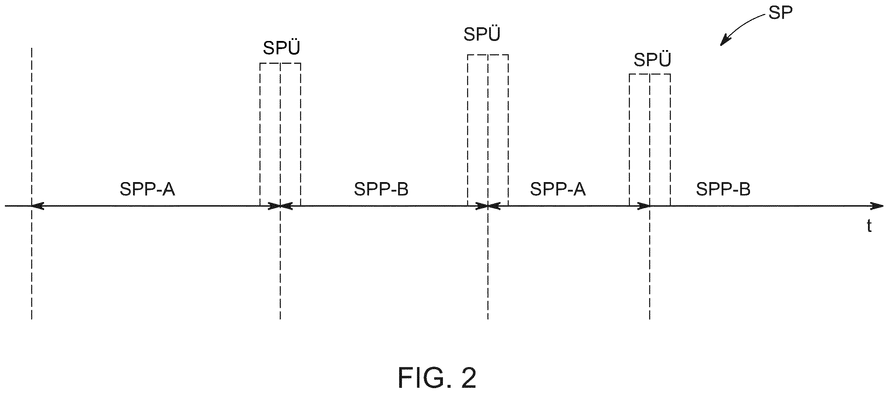

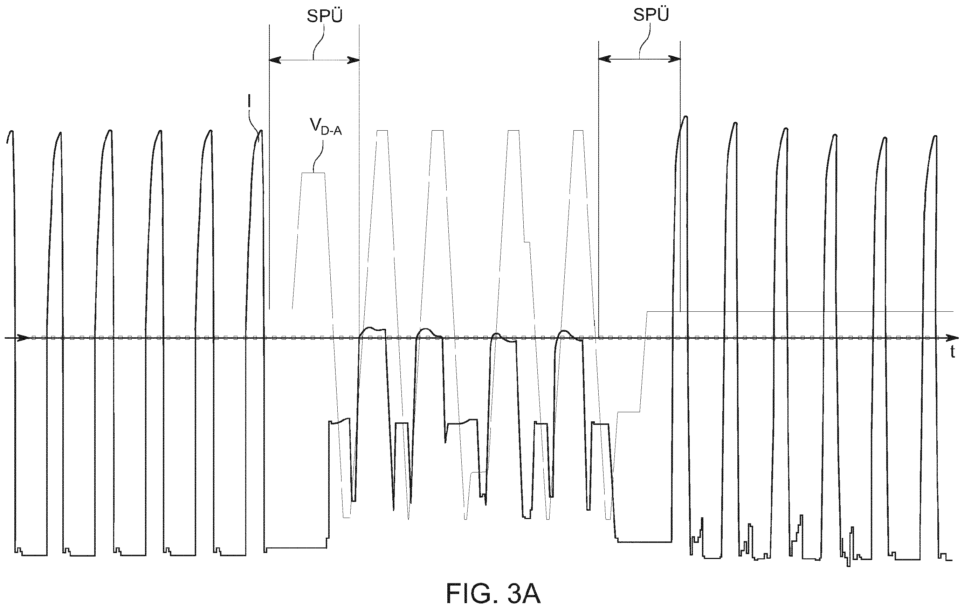

Fig. 2 zeigt schematisch einen Schweißprozess SP, der aus einer Folge unterschiedlicher bzw. verschiedener Schweißprozessphasen SPP besteht. Die verschiedenen Schweißprozessphasen SPP können beispielsweise eine Kurzlichtbogenschweißphase, eine Kurzlichtbogenschweißphase mit reversierender Drahtbewegung (CMT), eine Langlichtbogenschweißphase, eine Impulslichtbogenschweißphase, eine Sprühlichtbogenschweißphase und/oder eine Schweißphase mit rotierendem Lichtbogen umfassen. Die Sequenz der verschiedenartigen Schweißprozessphasen SPP kann je nach Schweißprozess SP unterschiedlich sein. Beispielsweise können sich zwei verschiedenartige Schweißprozessphasen SPP, beispielsweise die Schweißprozessphase SPP-A und die Schweißprozessphase SPP-B, zyklisch abwechseln, wie beispielhaft in Fig. 3A dargestellt. Beispielsweise kann sich eine Impulslichtbogenschweißphase mit einer Kurzlichtbogenschweißphase zyklisch abwechseln. Selbstverständlich können sich auch drei oder mehr Schweißprozessphasen SPP abwechseln (nicht dargestellt).

Fig. 2 zeigt auch schematisch die verschiedenen Schweißprozessübergänge SPÜ zwischen den Schweißprozessphasen SPP eines Schweißprozesses. In den Schweißprozessübergängen SPÜ werden die Übergangsschweißparameter ÜSP angepasst bzw. geregelt. Die Dauer der Schweißprozessüberganges SPÜ und die Gruppe der dabei eingepassten Übergangsschweißparameter ÜSP hängen von den beiden betreffenden Schweißprozessphasen SPP, zwischen denen der Schweißprozesübergang SPÜ erfolgt, ab.

Für die verschiedenen Schweißprozessphasen SPP des Schweißprozesses SP können jeweils zugehörige Lichtbogenparameter-Sollwerte, insbesondere Lichtbogenlängen-Sollwerte, für den zu verwendenden Lichtbogenparameter LBP voreingestellt werden. Diese Voreinstellungen sind durch einen Nutzer mittels eines Einstellelementes an der Schweißstromquelle 2 innerhalb vorgegebener Grenzen jeweils manuell justierbar bzw. nachjustierbar bzw. korrigierbar. Alternativ können die Voreinstellungen über ein Interface von der externen Steuerung 8 vorgenommen werden.

Für verschiedene Kombinationen von Paaren aufeinanderfolgender verschiedenartiger Schweißprozessphasen SPP des Schweißprozesses SP können jeweils für verschiedene vornehmbare Lichtbogenlängenparameteränderungen SLBLP zugehörige konfigurierbare Schweißparametersätze von Übergangsschweißparametern ÜSP in einem Parameterdatenspeicher 5 des Schweißgerätes 1 tabellarisch gespeichert sein. Bei einer möglichen Ausführungsform werden die Übergangsschweißparameter ÜSP über eine Schnittstelle aus einer Datenbank in den lokalen Datenspeicher 5 der Schweißstromquelle 2 geladen. In Abhängigkeit von der vorgenommenen Lichtbogenlängenparameteränderung ΔLBLP und der Kombination der beiden aufeinanderfolgenden verschiedenartigen Schweißprozessphasen SPP wird der zugehörige Schweißparametersatz aus dem Parameterdatenspeicher 5 des Schweißgerätes 1 ausgelesen und die entsprechenden Übergangsschweißparameter ÜSP werden durch eine Steuerung 4 des Schweißgerätes 1 zur Stabilisierung des betreffenden Schweißprozessphasenüberganges SPÜ zwischen den beiden Schweißprozessphasen SPP automatisch angepasst bzw. geregelt.

Bei einer weiteren möglichen Ausführungsform des erfindungsgemäßen Schweißgerätes 1 können für die verschiedenen Kombinationen von Paaren aufeinanderfolgender verschiedenartiger Schweißprozessphasen SPP des Schweißprozesses SP Übergangsfunktionskennlinien für verschiedene Übergangsschweißparameter ÜSP vorgesehen werden. In Abhängigkeit von der vorgenommenen Lichtbogenlängenparameteränderung ΔLBLP und den zugehörigen gespeicherten Übergangsfunktionskennlinien werden Parameterwerte für die verschiedenen Übergangsschweißparameter ÜSP bei dem Schweißprozessphasenübergang SPÜ durch eine Berechnungseinheit der Steuerung 4 des Schweißgerätes 1 berechnet und die Übergangsschweißparameter ÜSP zur Stabilisierung des Schweißprozessphasenüberganges SPÜ durch die Steuerung 4 des Schweißgerätes 1 automatisch angepasst. Das Schweißgerät 1 verfügt vorzugsweise über eine Schnittstelle zum Laden von Schweißparametersätzen der Übergangsschweißparameter ÜSP und/oder zum Laden von Übergangsfunktionskennlinien aus einer Datenbank. Diese Datenbank kann beispielsweise über ein Datennetzwerk mit einer Schnittstelle des Schweißgerätes 1 verbunden sein.

Verschiedene Übergangsschweißparameter ÜSP können mit dem erfindungsgemäßen Verfahren und der erfindungsgemäßen Vorrichtung in Abhängigkeit von einer vorgenommenen Lichtbogenparameteränderung, insbesondere einer Lichtbogenlängenänderung, zur Stabilisierung des Schweißprozessphasenüberganges SPÜ zwischen zwei aufeinanderfolgenden Schweißprozessphasen SPP des gleichen Schweißprozesses SP automatisch angepasst werden. Diese Übergangsschweißparameter ÜSP umfassen bei einer möglichen Ausführungsform eine Drahtvorschubgeschwindigkeit V_{D} der Schweißdrahtelektrode SDE und/oder eine Drahtvorschubbeschleunigung a_{D} der Schweißdrahtelektroden SDE. Weiterhin können die Übergangsschweißparameter ÜSP eine Amplitude und/oder eine Polarität des durch die Schweißdrahtelektrode SDE fließenden mittleren Schweißstromes I umfassen. Bei einer weiteren möglichen Ausführungsform umfassen die Übergangsschweißparameter ÜSP eine Amplitude und/oder eine Polarität der zwischen der Schweißdrahtelektrode SDE und dem Werkstück W anliegenden Schweißspannung U. Bei einer weiteren möglichen Ausführungsform des erfindungsgemäßen Verfahrens und der erfindungsgemäßen Vorrichtung weisen die Übergangsschweißparameter ÜSP eine Anzahl und/oder eine Frequenz von Impulsen des durch die Schweißdrahtelektrode SDE fließenden Schweißstromes I auf.

Mit positiv (+5) vorgenommener Lichtbogenlängenänderung ΔLBL oder Lichtbogenlängenparameteränderung ΔLBLP kann die Drahtvorschubgeschwindigkeit V_{D} der abschmelzbaren Schweißdrahtelektrode SDE als Übergangsschweißparameter ÜSP zur Stabilisierung des Schweißprozessphasenüberganges SPÜ zwischen zwei Schweißprozessphasen SPP des Schweißprozesses SP durch die Steuerung 4 automatisch erhöht werden. Umgekehrt kann bei negativ vorgenommener Lichtbogenlängenänderung ΔLBL die Drahtvorschubgeschwindigkeit V_{D} der abschmelzbaren Schweißdrahtelektrode SDE als Übergangsschweißparameter ÜSP zur Stabilisierung des Schweißprozessphasenüberganges SPÜ automatisch reduziert werden. Die Lichtbogenlängenänderung ΔLBL kann beispielsweise mit einem Korrekturwert erfolgen. Dabei bedeutet ein Korrekturwert von 0, dass keine Änderung der Lichtbogenlänge LBL erfolgt. Bei einer Änderung in positiver Richtung wird entsprechend die Lichtbogenlänge LBL erhöht und in negativer Richtung entsprechend reduziert. Im Folgenden wird dies beispielhaft an den Korrekturwerten -5, 0 und +5 beschrieben.

Bei einer weiteren möglichen Ausführungsform des erfindungsgemäßen Verfahrens und der erfindungsgemäßen Vorrichtung wird bei zunehmender vorgenommener (positiv) Lichtbogenlängenänderung ΔLBL die Amplitude und/oder die Zeitdauer des Schweißstromes I und/oder die Amplitude und/oder die Zeitdauer der Schweißspannung U automatisch reduziert. Umgekehrt kann bei abnehmender vorgenommener (negativ) Lichtbogenlängenänderung ΔLBL die Amplitude und/oder die Zeitdauer des Schweißstromes I und/oder die Amplitude und/oder die Zeitdauer der Schweißspannung U automatisch erhöht werden.

Weiterhin kann bei einer möglichen Ausführungsform mit zunehmender vorgenommener Lichtbogenlängenänderung ΔLBL die Anzahl und/oder die Frequenz von Impulsen des Schweißstromes I automatisch reduziert werden. Umgekehrt wird bei abnehmender vorgenommener Lichtbogenlängenänderung ΔLBL die Anzahl und/oder die Frequenz von Impulsen des Schweißstromes I automatisch erhöht.

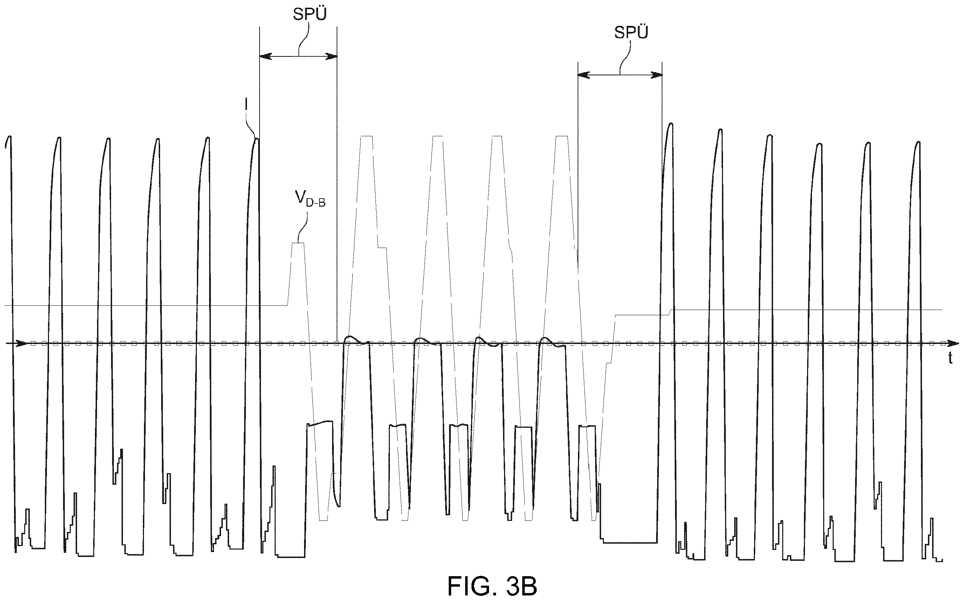

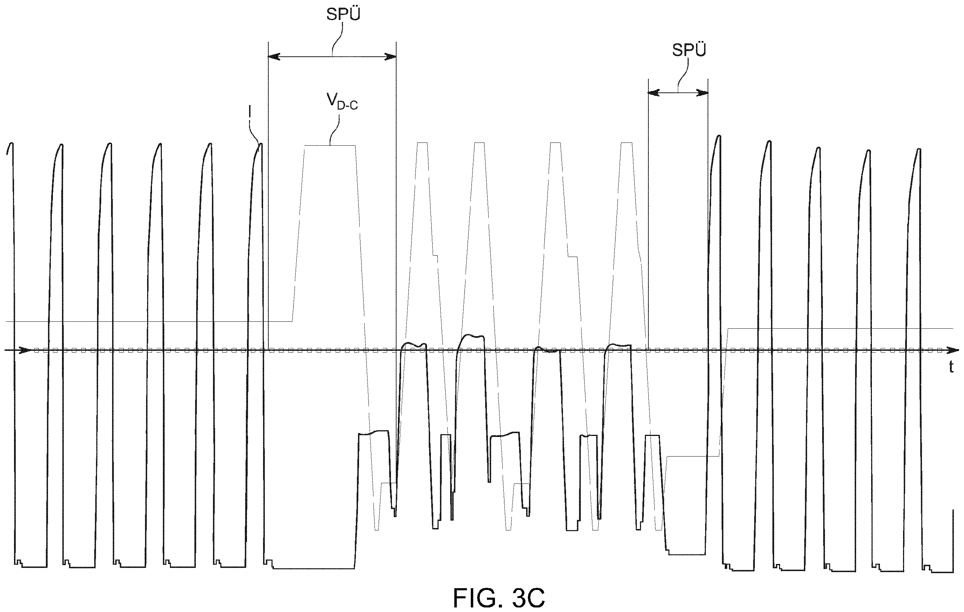

Fig. 2, 3 zeigten ein exemplarisches Beispiel eines Schweißprozesses SP mit zwei sich zyklisch abwechselnden Schweißprozessphasen SPP-A, SPP-B mit verschieden Schweißparametern, insbesondere einer Schweißspannung U, einem Schweißstrom I sowie einer Drahtvorschubgeschwindigkeit V_{D}. Die Übergangsschweißparameter ÜSP können an die Lichtbogenlängen LBL der Schweißprozessphasen A, B angepasst werden. Bei einer manuellen oder ferngesteuerten Änderung bzw. Nachjustierung bzw. Korrektur der Lichtbogenlängeneinstellung kann es zu Instabilitäten kommen, welche durch das erfindungsgemäße Verfahren vermieden bzw. beseitigt werden. Dieses bewirkt nämlich, dass die Dauer der Schweißprozessübergänge SPÜ durch die Änderung der Lichtbogenlänge LBL im Wesentlichen nicht verändert, insbesondere nicht verlängert, wird.

Parallel zu einer durch manuelle Nachjustierung herbeigeführten Lichtbogenlängenkorrektur erfolgt mithilfe des erfindungsgemäßen Verfahrens automatisch eine Korrektur der Übergangsschweißparameter ÜSP, insbesondere der Drahtvorschubgeschwindigkeit V_{D} des Schweißstromes I, sowie deren zeitliche Abläufe.

Darunter ist zu verstehen, dass in dem Schweißprozessübergang SPÜ die Drahtvorschubgeschwindigkeit vd kurzzeitig erhöht wird um einen Kurzschluss KS schneller einzuleiten und anschließend die Schweißdrahtelektrode SDE rückwärts bewegt wird. Alternativ kann die Drahtvorschubgeschwindigkeit vd stufenförmig geändert werden. Die Werte der Parameter sind dabei im Wesentlichen unabhängig von den Werten in den Schweißprozessphasen SPP, sodass diese frei wählbar sind. Ebenso können die zeitlichen Abläufe während der unterschiedlichen Schweißprozessübergänge SPÜ unterschiedlich sein (nicht dargestellt). Generell erfolgt die Regelung bzw. Anpassung in den Schweißprozessübergängen SPÜ in Abhängigkeit der Schweißprozessphasen SPPs, da jede Schweißprozessphase SPP einen unterschiedlichen Wärmeeintrag in das Werkstück W hat.

Allgemein wird der Schweißprozessübergang SPÜ beispielsweise auf ein Pulsende oder auf einen Kurzschluss KS getriggert. Diese Ereignisse können also als Start/Ende des Schweißprozessüberganges SPÜ dienen. Die Dauer des Schweißprozessübergangs SPÜ kann auch durch eine vorgegebene Zeitdauer/Zyklenzahl definiert sein. Die Anpassung der Übergangsschweißparameter kann aber auch vor Beginn des Schweißprozessüberganges SPÜ beginnen. Falls beispielsweise in einem Schweißprozess SP eine sehr hohe Drahtvorschubgeschwindigkeit vd erforderlich ist und in dem darauf folgenden Schweißprozess SP eine sehr niedrige Drahtvorschubgeschwindigkeit vd erforderlich ist, wird in den letzten Zyklen des aktuellen SP bereits die Drahtvorschubgeschwindigkeit vd gesenkt. Dadurch sind die Änderungen in dem Schweißprozessübergang SPÜ nicht so sprungartig und der Schweißprozessübergang erfolgt stabiler.

Beispielsweise kann in einem Schweißprozess SP ein Übergang bzw. ein Wechsel zwischen einer ersten Schweißprozessphase SPP-A (Impulslichtbogenschweißen) und einer zweiten Schweißprozessphase SPP-B, beispielsweise Kurzlichtbogenschweißen (entweder mit kontinuierliche Drahtvorschubgeschwindigkeit vd in Vorwärtsrichtung oder mit zyklischer Vor-/Rückbewegung der Drahtvorschubgeschwindigkeit vd), erfolgen. In der ersten Schweißprozessphase SPP-A (Impulslichtbogenschweißen) ist der Wärmeeintrag deutlich höher. Dadurch ist automatisch die Lichtbogenlänge LBL höher als in der zweiten Schweißprozessphase SPP-B (Kurzlichtbogen). Um von der ersten Schweißprozessphase A (Impulslichtbogenschweißen) in die zweite Schweißprozessphase B (Kurzlichtbogenphase) zu wechseln, wird mithilfe des erfindungsgemäßen Verfahrens automatisch diese Differenz in der Lichtbogenlänge ΔLBL überwunden. Wenn die Lichtbogenlänge LBL der Schweißprozessphase ohne das erfindungsgemäße Verfahren SPP-A erhöht wird, dauert ein Wechsel von der Schweißprozessphase SPP-A in die Schweißprozesslänge SPP-B länger, sodass möglicherweise nicht mehr das gewünschte Schweißergebnis erzielbar wäre. Mit dem erfindungsgemäßen Verfahren wird dem entgegengewirkt, sodass das gewünschte Schweißergebnis erzielt wird. Bei einer möglichen Ausführungsform wird beispielsweise die Drahtvorschubgeschwindigkeit V_{D} der Schweißdrahtelektrode SDE parallel zu einer Lichtbogenlängenänderung ΔLBL in dem Schweißprozessübergang SPÜ beim Wechsel von SPP-A auf SPP-B erhöht. Hierdurch lässt sich die Wegstrecke, d.h. die Lichtbogenlängendistanz, schneller überwinden. Mit dem erfindungsgemäßen Verfahren lässt sich die Qualität des Schweißergebnisses bei einem Schweißprozess SP, welcher verschiedenartige Schweißprozessphasen SPP umfasst, deutlich steigern.

In den Figuren 3A bis 3C sind Schweißprozessübergänge SPÜ im Details und beispielhaft dargestellt. Bei Fig. 3B ist die Lichtbogenlänge LBL reduziert (-5), bei Fig. 3C erhöht (+5). Dies erfolgt entsprechend im Vergleich zu Fig. 3A (+/- 0). Wesentlich ist hierbei, dass durch die Wahl bzw. die Regelung der Übergangsschweißparameter ÜSP die Dauer des Schweißprozessüberganges SPÜ im Wesentlichen konstant gehalten wird. Die Regelung der Übergangsschweißparameter ÜSP erfolgt also derart, dass im Wesentlichen der Sollwert für die Dauer des Schweißprozessübergangs SPÜ annähernd beibehalten wird. Dies wird hierbei im Wesentlichen durch die Regelung des Drahtvorschubs VD erreicht.

### BEZUGSZEICHEN

- 1: Schweißgerät
- 2: Schweißstromquelle
- 3: Schweißbrenner
- 4: Parameterspeicher
- 5: Steuerung
- 6: Schnittstelle
- 7: Netzwerk
- 8: Steuerung
- SP: Schweißprozess
- SPP: Schweißprozessphase
- SPÜ: Schweißprozessübergang
- SDE: Schweißdrahtelektrode
- W: Wertstücke
- LB: Schweißlichtbogen

## Patentansprüche

1. Verfahren zum Stabilisieren eines Schweißprozessphasenüberganges (SPÜ) zwischen verschiedenartigen Schweißprozessphasen (SPP-A, SPP-B) eines Schweißprozesses (SP), wobei die Schweißprozessphasen (SPP-A, SPP-B) verschiedene Schweißparameter aufweisen,
wobei zumindest in den Schweißprozessphasen (SPP) ein Werkstück (W), jeweils mit einem Schweißlichtbogen, (SLB) geschweißt wird, der sich zwischen einer Schweißdrahtelektrode (SDE) und dem Werkstück (W) erstreckt, und einen für die mindestens eine Schweißprozessphase, SPP, einstellbaren Lichtbogenlängenparameter, LBLP, aufweist,
**dadurch gekennzeichnet, dass** während eines Schweißprozessphasenüberganges (SPÜ) zwischen aufeinanderfolgenden verschiedenartigen Schweißprozessphasen (SPP-A, SPP-B), bei einer Änderung des eingestellten Lichtbogenlängenparameters, LBLP, des Schweißlichtbogens (SLB) parallel dazu mindestens ein Übergangsschweißparameter, ÜSP, in Abhängigkeit von der vorgenommenen Lichtbogenlängenparameteränderung, ΔLBLP, zur Stabilisierung des Schweißprozessphasenüberganges (SPÜ) automatisch angepasst wird.

2. Verfahren nach Anspruch 1,
wobei die Übergangsschweißparameter,ÜSP,
- eine Drahtvorschubgeschwindigkeit, V_{D}, und/oder Drahtvorschubbeschleunigung, a_{D}, der abschmelzbaren Schweißdrahtelektrode (SDE) und/oder
- eine Amplitude und/oder Polarität des durch die Schweißdrahtelektrode, SDE, fließenden mittleren Schweißstromes, Iₛ,
- eine Amplitude und/oder Polarität der zwischen der Schweißdrahtelektrode (SDE) und dem Werkstück (W) anliegenden Schweißspannung, Uₛ, und/oder
- eine Anzahl und/oder Frequenz von Impulsen des durch die Schweißdrahtelektrode, SDE, fließenden Schweißstromes, Iₛ, aufweisen.

3. Verfahren nach Anspruch 1 oder 2,
wobei mit zunehmender bzw. abnehmender vorgenommener Lichtbogenlängenänderung, ΔLBL, die Drahtvorschubgeschwindigkeit, V_{D}, der abschmelzbaren Schweißdrahtelektrode (SDE) als Übergangsschweißparameter, ÜSP, zur Stabilisierung des Schweißprozessphasenüberganges (SPÜ) automatisch erhöht bzw. reduziert wird.

4. Verfahren nach Anspruch 3,
wobei mit zunehmender bzw. abnehmender vorgenommener Lichtbogenlängenänderungen, ΔLBL, die Amplitude und/oder die Zeitdauer des Schweißstromes, Iₛ, und/oder die Amplitude der Schweißspannung, Uₛ, automatisch reduziert bzw. erhöht wird.

5. Verfahren nach einem der vorangehenden Ansprüche 3 oder
4, wobei mit zunehmender bzw. abnehmender vorgenommener Lichtbogenlängenänderung, ΔLBL, die Anzahl und/oder die Frequenz von Impulsen des Schweißstromes, Iₛ, automatisch reduziert bzw. erhöht wird.

6. Verfahren nach einem der vorangehenden Ansprüche 1 bis 5,
wobei für verschiedene Kombinationen von Paaren aufeinanderfolgender verschiedenartiger Schweißprozessphasen (SPP-A, SPP-B) des Schweißprozesses (SP) jeweils für verschiedene vornehmbare Lichtbogenparameteränderungen, ΔLBP, zugehörige konfigurierbare Schweißparametersätze von Übergangsschweißparametern, ÜSP, in einem Parameterdatenspeicher (5) tabellarisch gespeichert werden.

7. Verfahren nach Anspruch 6,
wobei in Abhängigkeit von der vorgenommenen Lichtbogenparameteränderung, ΔLBP, und der Kombination der beiden aufeinanderfolgenden verschiedenartigen Schweißprozessphasen (SPP-A, SPP-B) der zugehörige Schweißparametersatz aus dem Parameterdatenspeicher (5) ausgelesen und die entsprechenden Übergangsschweißparameter, ÜSP, zur Stabilisierung des Schweißprozessphasenüberganges (SPÜ) zwischen den beiden Schweißprozessphasen (SPP-A, SPP-B) angepasst werden.

8. Verfahren nach einem der vorangehenden Ansprüche 1 bis 7,
wobei für verschiedene Kombinationen von Paaren aufeinanderfolgender verschiedenartiger Schweißprozessphasen (SPP-A, SPP-B) des Schweißprozesses (SP) Übergangsfunktionskennlinien für verschiedene Übergangsschweißparameter, ÜSP, vorgesehen werden.

9. Verfahren nach Anspruch 8,
wobei in Abhängigkeit von der vorgenommenen Lichtbogenparameteränderung, ΔLBP, und der zugehörigen gespeicherten Übergangsfunktionskennlinien Parameterwerte für die verschiedenen Übergangsschweißparameter, ÜSP, während des Schweißprozessphasenüberganges (SPÜ) berechnet und die Übergangsschweißparameter, ÜSP, zur Stabilisierung des Schweißprozessphasenüberganges (SPÜ) entsprechend den berechneten Parameterwerten angepasst werden.

10. Verfahren nach einem der vorangehenden Ansprüche 1 bis 9, wobei die Schweißprozessphasen (SPP-A, SPP-B) aufweisen:
eine Kurzlichtbogenschweißphase,
eine Langlichtbogenschweißphase,
eine Impulslichtbogenschweißphase,
eine Kurzlichtbogenschweißphase mit Vor- oder Rückbewegung,
eine Sprühlichtbogenschweißphase,
eine Schweißphase mit rotierendem Schweißlichtbogen und/oder
eine Übergangslichtbogenschweißphase.

11. Schweißgerät (1) zum Schweißen eines Werkstückes (W) in einem Schweißprozess (SP) der verschiedenartige Schweißprozessphasen (SPP-A, SPP-B) umfasst, die verschiedene Schweißparameter aufweisen, in denen das Werkstück (W) jeweils mit einem Schweißlichtbogen (LB) geschweißt wird, der sich zwischen einer Schweißdrahtelektrode (SDE) des Schweißgerätes (1) und dem Werkstück (W) erstreckt, wobei für die Schweißprozessphasen (SPP-A, SPP-B) ein Lichtbogenlängenparameter, LBLP, des Schweißlichtbogens (LB) einstellbar ist,
**dadurch gekennzeichnet, dass**
das Schweißgerät (1) eine Steuerung (4) aufweist, die während eines Schweißprozessüberganges (SPÜ) zwischen den verschiedenartigen Schweißprozessphasen (SPP-A, SPP-B) des Schweißprozesses (SP) eine Änderung des Lichtbogenlängenparameters, ΔLBLP, des Schweißlichtbogens (LB) entsprechend der für die Schweißprozessphasen (SPP-A, SPP-B) eingestellten Lichtbogenlängenparameter, LBLP, vornimmt und gleichzeitig mindestens einen Übergangsschweißparameter, ÜSP, einer Schweißstromquelle (2) des Schweißgerätes (1) in Abhängigkeit der vorgenommenen Lichtbogenlängenparameteränderung, ΔLBLP, zur Stabilisierung des Schweißprozessüberganges (SPÜ) innerhalb des Schweißprozesses (SP) automatisch anpasst.

12. Schweißgerät nach Anspruch 11,
wobei für die verschiedenen Schweißprozessphasen (SPP-A, SPP-B) des Schweißprozesses (SP) jeweils zugehörige Lichtbogenlängenparameter-Sollwerte für den zu verwendenden Lichtbogenlängenparameter, LBLP, voreingestellt sind, welche durch einen Nutzer mittels eines Einstellelementes oder durch eine externe Steuerung (8) innerhalb vorgegebener Grenzen jeweils manuell justierbar sind.

13. Schweißgerät nach Anspruch 11 oder 12,
wobei für verschiedene Kombinationen von Paaren aufeinanderfolgender verschiedenartiger Schweißprozessphasen (SPP-A, SPP-B) des Schweißprozesses (SP) jeweils für verschiedene vornehmbare Lichtbogenlängenparameteränderungen, ΔLBLP, zugehörige konfigurierbare Schweißparametersätze von Übergangsschweißparametern, ÜSP, in einem Parameterdatenspeicher (5) des Schweißgerätes (1) tabellarisch gespeichert sind,
wobei in Abhängigkeit von der vorgenommenen Lichtbogenlängenparameteränderung, ΔLBLP, und der Kombination der beiden aufeinanderfolgenden verschiedenartigen Schweißprozessphasen (SPP-A, SPP-B) der zugehörige Schweißparametersatz aus dem Parameterdatenspeicher (5) des Schweißgerätes (1) ausgelesen und die entsprechenden Übergangsschweißparameter, ÜSP, durch die Steuerung (4) des Schweißgerätes (1) zur Stabilisierung des Schweißprozessphasenüberganges (SPÜ) zwischen den beiden Schweißprozessphasen (SPP-A, SPP-B) angepasst werden.

14. Schweißgerät nach einem der vorangehenden Ansprüche 11 bis 13,
wobei für die verschiedenen Kombinationen von Paaren aufeinanderfolgender verschiedenartiger Schweißprozessphasen (SPP-A, SPP-B) des Schweißprozesses (SP) Übergangsfunktionskennlinien für verschiedene Übergangsschweißparameter vorgesehen sind,
wobei in Abhängigkeit von der vorgenommenen Lichtbogenlängenparameteränderung, ΔLBLP, und den zugehörigen gespeicherten Übergangsfunktionskennlinien Parameterwerte für die verschiedenen Übergangsschweißparameter, ÜSP, während des Schweißprozessphasenüberganges (SPÜ) durch eine Berechnungseinheit der Steuerung (4) des Schweißgerätes (1) berechnet und die Übergangsschweißparameter, ÜSP, zur Stabilisierung des Schweißprozessphasenüberganges (SPÜ) durch die Steuerung (4) des Schweißgerätes (1) angepasst werden.

15. Schweißgerät nach einem der vorangehenden Ansprüche 11 bis 14 mit einer Schnittstelle zum Laden von Schweißparametersätzen der Übergangsschweißparameter, ÜSP, und/oder zum Laden von Übergangsfunktionskennlinien aus einer Datenbank.

## Claims

1. Method for stabilising a welding process phase transition (SPÜ) between different welding process phases (SPP-A, SPP-B) of a welding process (SP),
the welding process phases (SPP-A, SPP-B) having different welding parameters,
a workpiece (W) being welded at least in the welding process phases (SPP), in each case by means of a welding arc (SLB) which extends between a welding wire electrode (SDE) and the workpiece (W) and has an arc length parameter LBLP adjustable for the at least one welding process phase SPP, **characterised in that**, during a welding process phase transition (SPÜ) between consecutive different welding process phases (SPP-A, SPP-B), if the set arc length parameter LBLP of the welding arc (SLB) is changed in parallel with this, at least one transition welding parameter ÜSP is automatically adapted as a function of the performed arc length parameter change ΔLBLP so as to stabilise the welding process phase transition (SPÜ).

2. Method according to claim 1,
wherein the transition welding parameters ÜSP include
- a wire feed rate V_{D} and/or wire feed acceleration a_{D} of the fusible welding wire electrode (SDE) and/or
- an amplitude and/or polarity of the average welding current Iₛ flowing through the welding wire electrode SDE,
- an amplitude and/or polarity of the welding voltage Uₛ present between the welding wire electrode (SDE) and the workpiece (W) and/or
- a number and/or frequency of pulses of the welding current Iₛ flowing through the welding wire electrode SDE.

3. Method according to either claim 1 or claim 2,
wherein, as the performed arc length change ΔLBL increases and decreases, the wire feed rate V_{D} of the fusible welding wire electrode (SDE), as a transition welding parameter ÜSP, is automatically increased and decreased so as to stabilise the welding process phase transition (SPÜ).

4. Method according to claim 3,
wherein, as the performed arc length change ΔLBL increases and decreases, the amplitude and/or duration of the welding current Iₛ and/or the amplitude of the welding voltage Uₛ are automatically decreased and increased.

5. Method according to either claim 3 or claim 4,
wherein, as the performed arc length change ΔLBL increases and decreases, the number and/or frequency of pulses of the welding current Iₛ is automatically decreased and increased.

6. Method according to any of claims 1 to 5,
wherein, for different combinations of pairs of consecutive different welding process phases (SPP-A, SPP-B) of the welding process (SP), for respective different performable arc parameter changes ΔLBP associated configurable welding parameter sets of transition welding parameters ÜSP are stored in table form in a parameter data store (5).

7. Method according to claim 6,
wherein, as a function of the performed arc parameter change ΔLBP and of the combination of the two consecutive different welding process phases (SPP-A, SPP-B), the associated welding parameter set is read out from the parameter data store (5), and the corresponding transition welding parameters ÜSP are adapted so as to stabilise the welding process phase transition (SPÜ) between the two welding process phases (SPP-A, SPP-B).

8. Method according to any of proceeding claims 1 to 7, wherein, for different combinations of pairs of consecutive different welding process phases (SPP-A, SPP-B) of the welding process (SP), transition function characteristics for different transition welding parameters ÜSP are provided.

9. Method according to claim 8,
wherein, as a function of the performed arc parameter change ΔLBP and of the associated stored transition function characteristics, parameter values for the various transition welding parameters ÜSP during the welding process phase transition (SPÜ) are calculated, and the transition welding parameters ÜSP are adapted so as to stabilise the welding process phase transition (SPÜ) in accordance with the calculated parameter values.

10. Method according to any of preceding claims 1 to 9,
wherein the welding process phases (SPP-A, SPP-B) include:
a short arc welding phase,
a long arc welding phase,
a pulsed arc welding phase,
a short arc welding phase with advance or reverse movement,
a spray arc welding phase,
a welding phase with a rotating welding arc, and/or
a transition arc welding phase.

11. Welding device (1) for welding a workpiece (W) in a welding process (SP) having different welding process phases (SPP-A, SPP-B) which have different welding parameters, in each of which the workpiece (W) is welded by means of a welding arc (LB) which extends between a welding wire electrode (SDE) of the welding device (1) and the workpiece (W), an arc length parameter LBLP of the welding arc (LB) being adjustable for the welding process phases (SPP-A, SPP-B),
**characterised in that** the welding device (1) has a control system (4) which, during a welding process phase transition (SPÜ) between the different welding process phases (SPP-A, SPP-B) of the welding process (SP), performs a change in the arc length parameter ΔLBLP of the welding arc (LB) in accordance with the arc length parameters LBLP set for the welding process phases (SPP-A, SPP-B) and simultaneously automatically adapts at least one transition welding parameter ÜSP of a welding current source (2) of the welding device (1) as a function of the performed arc length parameter change ΔLBLP so as to stabilise the welding process phase transition (SPÜ) within the welding process (SP).

12. Welding device according to claim 11,
wherein, for the respective different welding process phases (SPP-A, SPP-B) of the welding process (SP), associated arc length parameter target values for the arc length parameter LBLP are pre-set, and can in each case be adjusted manually by a user within predefined limits by way of an adjustment element or using an external control system (8).

13. Welding device according to either claim 11 or claim 12,
wherein, for different combinations of pairs of consecutive different welding process phases (SPP-A, SPP-B) of the welding process (SP), for respective different performable arc length parameter changes ΔLBLP associated configurable welding parameter sets of transition welding parameters ÜSP are stored in table form in a parameter data store (5) of the welding device (1),
wherein, as a function of the performed arc length parameter change ΔLBLP and of the combination of the two consecutive different welding process phases (SPP-A, SPP-B), the associated welding parameter set is read out from the parameter data store (5) of the welding device (1) and the corresponding transition welding parameters ÜSP are adapted by the control system (4) of the welding device (1) so as to stabilise the welding process phase transition (SPÜ) between the two welding process phases (SPP-A, SPP-B).

14. Welding device according to any of preceding claims 11 to 13, wherein, for the different combinations of pairs of consecutive different welding process phases (SPP-A, SPP-B) of the welding process (SP), transition function characteristics for different transition welding parameters ÜSP are provided,
wherein, as a function of the performed arc length parameter change ΔLBLP and of the associated stored transition function characteristics, parameter values for the various transition welding parameters ÜSP during the welding process phase transition (SPÜ) are calculated by a calculation unit of the control system (4) of the welding device (1), and the transition welding parameters ÜSP are adapted by the control system (4) of the welding device (1) so as to stabilise the welding process phase transition (SPÜ).

15. Welding device according to any of preceding claims 11 to 14, comprising an interface for loading welding parameter sets of the transition welding parameters ÜSP and/or loading transition function characteristics from a database.

## Revendications

1. Procédé pour stabiliser une transition de phase de processus de soudage (SPÜ) entre différentes phases de processus de soudage (SPP-A, SPP-B) d'un processus de soudage (SP), les phases de processus de soudage (SPP-A, SPP-B) présentant différents paramètres de soudage,
dans lequel, au moins dans les phases de processus de soudage (SPP), une pièce (W) est soudée chaque fois avec un arc électrique de soudage (SLB) qui s'étend entre un fil-électrode de soudage (SDE) et la pièce (W), et qui présente un paramètre de longueur d'arc électrique, LBLP, réglable pour ladite au moins une phase de processus de soudage, SPP,
**caractérisé en ce que**, pendant une transition de phase de processus de soudage (SPÜ) entre différentes phases de processus de soudage successives (SPP-A, SPP-B), lors d'une modification du paramètre de longueur d'arc électrique réglé, LBLP, de l'arc électrique de soudage (SLB), au moins un paramètre de soudage de transition, ÜSP, est adapté automatiquement en parallèle en fonction de la modification de paramètre de longueur d'arc électrique effectuée, ΔLBLP, pour stabiliser la transition de phase de processus de soudage (SPÜ) .

2. Procédé selon la revendication 1,
dans lequel les paramètres de soudage de transition, ÜSP, présentent
- une vitesse d'avance de fil, V_{D}, et/ou une accélération d'avance de fil, a_{D}, du fil-électrode de soudage fusible (SDE) et/ou
- une amplitude et/ou une polarité du courant de soudage moyen traversant le fil-électrode de soudage, SDE, Iₛ,
- une amplitude et/ou une polarité de la tension de soudage appliquée entre le fil-électrode de soudage (SDE) et la pièce (W), U_{S}, et/ou
- un nombre et/ou une fréquence d'impulsions du courant de soudage, Iₛ, traversant le fil-électrode de soudage, SDE.

3. Procédé selon la revendication 1 ou 2,
dans lequel, lorsque la modification de longueur d'arc électrique, ΔLBL, effectuée augmente ou diminue, la vitesse d'avance de fil, V_{D}, du fil-électrode de soudage fusible (SDE) est automatiquement augmentée ou réduite en tant que paramètre de soudage de transition, ÜSP, pour stabiliser la transition de phase de processus de soudage (SPÜ).

4. Procédé selon la revendication 3,
dans lequel, lorsque la modification de longueur d'arc électrique, ΔLBL, effectuée augmente ou diminue, l'amplitude et/ou la durée du courant de soudage, Iₛ, et/ou l'amplitude de la tension de soudage, U_{S}, sont automatiquement réduites ou augmentées.

5. Procédé selon l'une des revendications 3 ou 4 précédentes,
dans lequel, lorsque la modification de longueur d'arc électrique, ΔLBL, effectuée augmente ou diminue, le nombre et/ou la fréquence d'impulsions du courant de soudage, I_{S}, sont automatiquement réduits ou augmentés.

6. Procédé selon l'une des revendications 1 à 5 précédentes,
dans lequel, pour différentes combinaisons de paires de phases de processus de soudage (SPP-A, SPP-B) différentes successives du processus de soudage (SP), pour chacune des différentes modifications de paramètre d'arc électrique, ΔLBP, pouvant être effectuées, des jeux de paramètres de soudage configurables associés de paramètres de soudage de transition, ÜSP, sont stockés sous forme de tableau dans une mémoire de données de paramètres (5).

7. Procédé selon la revendication 6,
dans lequel, en fonction de la modification de paramètre d'arc électrique, ΔLBP, effectuée et de la combinaison des deux phases de processus de soudage différentes successives (SPP-A, SPP-B), le jeu de paramètres de soudage associé est lu dans la mémoire de données de paramètres (5) et les paramètres de soudage de transition, ÜSP, correspondants sont adaptés pour stabiliser la transition de phase de processus de soudage (SPÜ) entre les deux phases de processus de soudage (SPP-A, SPP-B).

8. Procédé selon l'une des revendications 1 à 7 précédentes,
dans lequel, pour différentes combinaisons de paires de phases de processus de soudage (SPP-A, SPP-B) différentes successives du processus de soudage (SP), il est prévu des courbes caractéristiques fonctionnelles de transition pour différents paramètres de soudage de transition, ÜSP.

9. Procédé selon la revendication 8,
dans lequel, en fonction de la modification de paramètre d'arc électrique, ΔLBP, effectuée et des courbes caractéristiques fonctionnelles de transition stockées associées, des valeurs de paramètres pour les différents paramètres de soudage de transition, ÜSP, sont calculées pendant la transition de phase de processus de soudage (SPÜ) et les paramètres de soudage de transition, ÜSP, sont adaptés pour stabiliser la transition de phase de processus de soudage (SPÜ) conformément aux valeurs de paramètres calculées.

10. Procédé selon l'une des revendications 1 à 9 précédentes, dans lequel les phases de processus de soudage (SPP-A, SPP-B) présentent :
une phase de soudage à l'arc court,
une phase de soudage à l'arc long,
une phase de soudage à l'arc pulsé,
une phase de soudage à l'arc court avec mouvement d'avance ou de recul,
une phase de soudage à l'arc par pulvérisation,
une phase de soudage avec arc de soudage rotatif et/ou
une phase de soudage à l'arc de transition.

11. Appareil de soudage (1) pour souder une pièce (W) dans un processus de soudage (SP) qui comprend différentes phases de processus de soudage (SPP-A, SPP-B) qui présentent différents paramètres de soudage, dans lesquelles la pièce (W) est soudée chaque fois avec un arc électrique de soudage (LB) qui s'étend entre un fil-électrode de soudage (SDE) de l'appareil de soudage (1) et la pièce (W), un paramètre de longueur d'arc électrique, LBLP, de l'arc électrique de soudage (LB) étant réglable pour les phases de processus de soudage (SPP-A, SPP-B),
**caractérisé en ce que**
l'appareil de soudage (1) présente une commande (4) qui, pendant une transition de processus de soudage (SPÜ) entre les différentes phases de processus de soudage (SPP-A, SPP-B) du processus de soudage (SP), effectue une modification du paramètre de longueur d'arc électrique, ΔLBLP, de l'arc électrique de soudage (LB) en fonction des paramètres de longueur d'arc électrique réglés pour les phases de processus de soudage (SPP-A, SPP-B) et, en même temps, adapte automatiquement au moins un paramètre de soudage de transition, ÜSP, d'une source de courant de soudage (2) de l'appareil de soudage (1) en fonction de la modification de paramètre de longueur d'arc électrique, ΔLBLP, effectuée, pour stabiliser la transition de processus de soudage (SPÜ) au sein du processus de soudage (SP).

12. Appareil de soudage selon la revendication 11,
dans lequel, pour les différentes phases de processus de soudage (SPP-A, SPP-B) du processus de soudage (SP), des valeurs de consigne de paramètre de longueur d'arc électrique associées sont chaque fois préréglées pour le paramètre de longueur d'arc électrique, LBLP, à utiliser, lesquelles peuvent être chaque fois ajustées manuellement par un utilisateur au moyen d'un élément de réglage ou par une commande externe (8) dans des limites prédéfinies.

13. Appareil de soudage selon la revendication 11 ou 12,
dans lequel, pour différentes combinaisons de paires de phases de processus de soudage différentes successives (SPP-A, SPP-B) du processus de soudage (SP), pour chacune des différentes modifications de paramètre de longueur d'arc électrique, ΔLBLP, pouvant être effectuées, des jeux de paramètres de soudage configurables associés de paramètres de soudage de transition, ÜSP, sont stockés sous forme de tableau dans une mémoire de données de paramètres (5) de l'appareil de soudage (1),
dans lequel, en fonction de la modification de paramètre d'arc électrique, ΔLBP, effectuée et de la combinaison des deux phases de processus de soudage différentes successives (SPP-A, SPP-B), le jeu de paramètres de soudage associé est lu dans la mémoire de données de paramètres (5) et les paramètres de soudage de transition, ÜSP, correspondants sont adaptés pour stabiliser la transition de phase de processus de soudage (SPÜ) entre les deux phases de processus de soudage (SPP-A, SPP-B).

14. Appareil de soudage selon l'une des revendications 11 à 13 précédentes,
dans lequel, pour les différentes combinaisons de paires de phases de processus de soudage (SPP-A, SPP-B) différentes successives du processus de soudage (SP), il est prévu des courbes caractéristiques fonctionnelles de transition pour différents paramètres de soudage de transition,
dans lequel, en fonction de la modification de paramètre de longueur d'arc électrique, ΔLBLP, effectuée et des courbes caractéristiques fonctionnelles de transition stockées associées, des valeurs de paramètres pour les différents paramètres de soudage de transition, ÜSP, sont calculées par une unité de calcul de la commande (4) de l'appareil de soudage (1) pendant la transition de phase de processus de soudage (SPÜ), et les paramètres de soudage de transition, ÜSP, sont adaptés par la commande (4) de l'appareil de soudage (1) pour stabiliser la transition de phase de processus de soudage (SPÜ) .

15. Appareil de soudage selon l'une des revendications 11 à 14 précédentes, comprenant une interface pour charger des jeux de paramètres de soudage des paramètres de soudage de transition, ÜSP, et/ou pour charger des courbes caractéristiques fonctionnelles de transition à partir d'une base de données.
